# EUROPÄISCHE PATENTANMELDUNG

(11) **EP 2 393 186 A2**
(43) Veröffentlichungstag der Anmeldung: **07.12.2011**
(21) Anmeldenummer: 11004225.6
(22) Anmeldetag: 23.05.2011
(51) Int. Cl.: H02K 1/27

(54) **Elektromotor**

(30) Priorität: 04.06.2010 DE 102010023159
(71) Anmelder: Ebm-Papst St. Georgen GmbH & CO. KG, 78112 St. Georgen (DE)
(72) Erfinder: Rombach, Volker, 78120 Furtwangen (DE)
(74) Vertreter: Raible, Tobias

(57) **Zusammenfassung**

Ein Elektromotor hat einen Rotor (36), welcher eine Mehrzahl von Polschuhen (136) und einen magnetischen Rückschluss (130) aufweist, welcher durch Halteabschnitte (132,134a,134b) mechanisch mit den Polschuhen (136) verbunden ist. Zwischen dem Rückschluss (130) und einem Polschuh (136) ist jeweils eine Ausnehmung (160) vorgesehen, in welcher mindestens ein Permanentmagnet (38) angeordnet ist. An diese Ausnehmung (160) schließt sich auf jeder Seite des Permanentmagneten (38) etwa in Umfangsrichtung ein magnetisch schlecht leitender Bereich (146a,146b) an, der auf seiner dem Luftspalt (39) zugewandten Seite an einen der Halteabschnitte (134a,134b) angrenzt. Die in Umfangsrichtung gemessene Breite (beta) eines Polschuhs (136) nimmt in Richtung weg von der Magnet-Polschuh-Grenze (138) zum Luftspalt (39) hin in einer Übergangszone bis zu einer Stelle (142) geringster Breite ab. In dieser Übergangszone hat ein Polschuh (136) jeweils auf seiner dem benachbarten Polschuh (136) zugewandten Seite eine Flanke (139). Die Halteabschnitte (134a,134b) sind als Federelemente ausgebildet, welche die Polschuhe (136) in Richtung zu den Permanentmagneten (38) beaufschlagen, um letztere in den Ausnehmungen (160) festzuhalten.

## Beschreibung

Derartige Motoren werden wegen ihres niedrigen axialen Trägheitsmoments für Antriebsaufgaben verwendet, bei denen ein Elektromotor mit seinen Bewegungen elektrischen Befehlen sehr schnell folgen muss, z. B. zur schnellen Verstellung von Teilen oder zur Servounterstützung von Bewegungen. In einem solchen Motor dürfen die Permanentmagnete nicht klappern und sich auch in axialer Richtung nicht verschieben.

Es ist deshalb eine Aufgabe der Erfindung, einen neuen Elektromotor bereit zu stellen.

Nach der Erfindung wird das erreicht durch den Gegenstand des Patentanspruchs 1. Man erhält so einen Elektromotor, bei dem man im Rotor Keramikmagnete verwenden kann, deren Winkelerstreckung nicht viel kleiner ist als eine Polteilung des Rotors, und bei dem man eine rotatorisch induzierte Spannung mit guter Form erhält. Dies ermöglich es, das Leistungsgewicht solcher Motoren zu verbessern, d. h. für die gleiche Leistung benötigt man einen kleineren und damit leichteren Motor als bisher. Dabei werden die Dauermagnete so im Rotor festgehalten, dass sie nicht klappern oder herausfallen können. Dies wird durch die Erfindung auf einfache und zuverlässige Weise, und dazu sehr preiswert, erreicht. Die Erfindung erlaubt auch die Verwendung von Keramikmagneten mit Bestandteilen aus seltenen Erden, z.B. Neodym. Solche Keramikmagnete sind spröde und könnten bei mechanischer Belastung leicht brechen. Das wird durch die Erfindung weitgehend verhindert.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, und aus den übrigen Unteransprüchen. Es zeigt:
- Fig. 1: einen Längsschnitt durch einen Innenläufermotor mit permanentmagnetischer Erregung, nach dem Stand der Technik,
- Fig. 2: einen Schnitt, gesehen längs der Linie II-II der Fig. 1, in einem gegenüber Fig. 1 vergrößertem Maßstab, ebenfalls nach dem Stand der Technik,
- Fig. 3: eine raumbildliche Darstellung, welche die Dauermagnete 38 eines Rotors 36 vor der Montage zeigt,
- Fig. 4: eine Variante zu Fig. 2,
- Fig. 5: eine Seitenansicht des Rotorblechpakets 130, gesehen in Richtung des Pfeiles V der Fig. 3,
- Fig. 6: einen Schnitt, gesehen längs der Linie VI-VI der Fig. 5, bei dem die Dauermagnete in ihrer montierten Stellung dargestellt sind; Fig. 6 ist gegenüber Fig. 5 vergrößert dargestellt, und zeigt auch ein Kerbwerkzeug,
- Fig. 7: eine vergrößerte Darstellung der Einzelheit VII der Fig. 6, und
- Fig. 8: eine vergrößerte Darstellung eines beispielhaften Werkzeugs und
- Fig. 9: eine schematische Darstellung zur Erläuterung der Befestigung der Rotormagnete.

In den nachfolgenden Zeichnungen werden gleiche oder gleich wirkende Teile mit denselben Bezugszeichen bezeichnet und jeweils nur einmal beschrieben. Begriffe wie oben, unten, links, recht beziehen sich auf die jeweilige Zeichnungsfigur. Die Winkel, z.B. β, sind durch Pfeile und gerade Linien vereinfacht dargestellt.

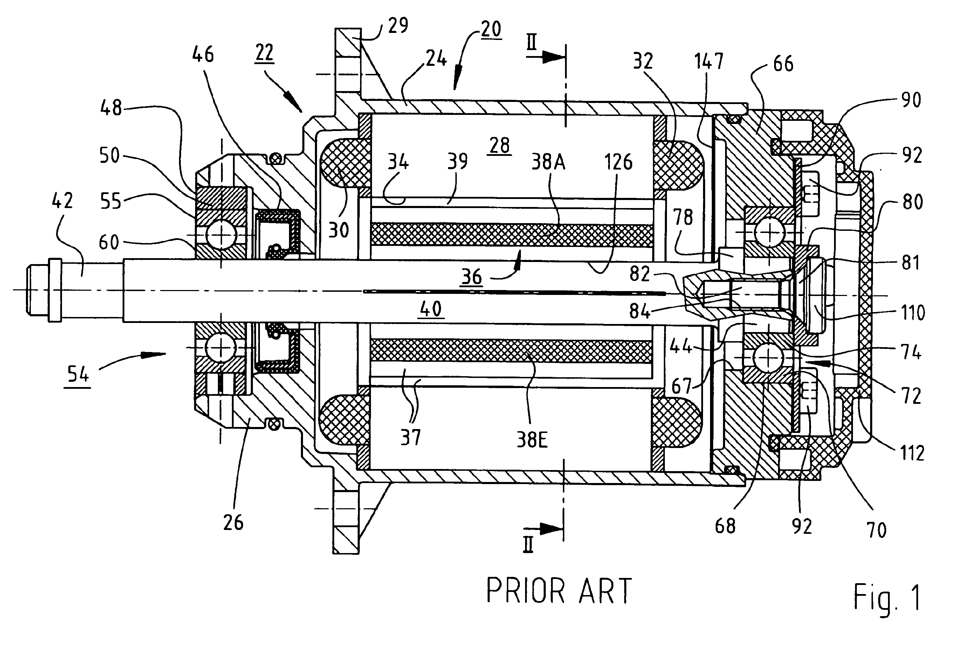

Fig. 1 zeigt einen elektronisch kommutierten dreiphasigen Innenläufermotor 20 mit einem Gehäuse 22, dass ein zylindrisches Gehäuseteil 24, ein A-Lagerschild 26 und einen Befestigungsflansch 29 aufweist.

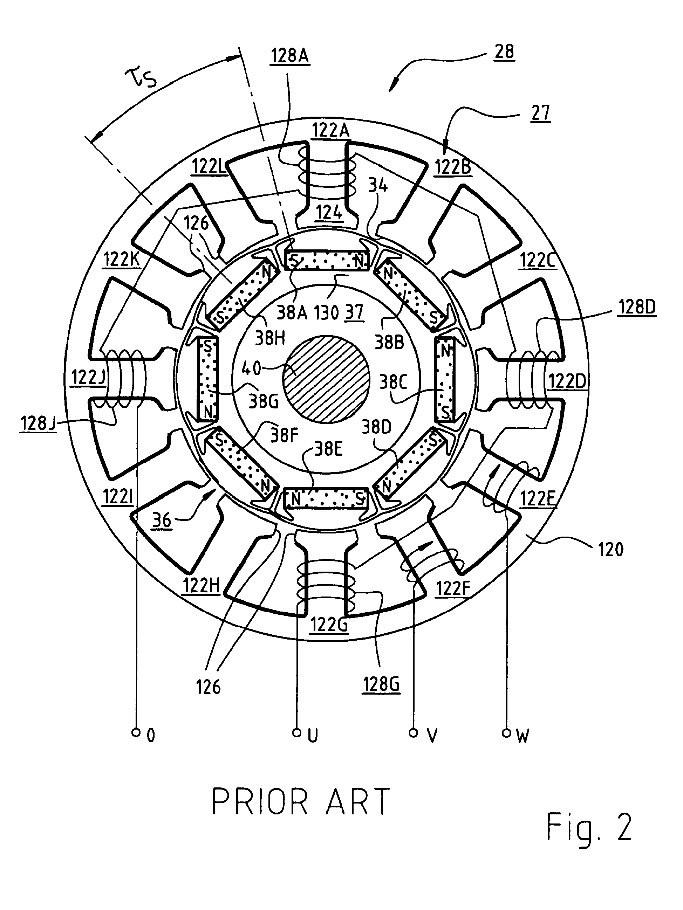

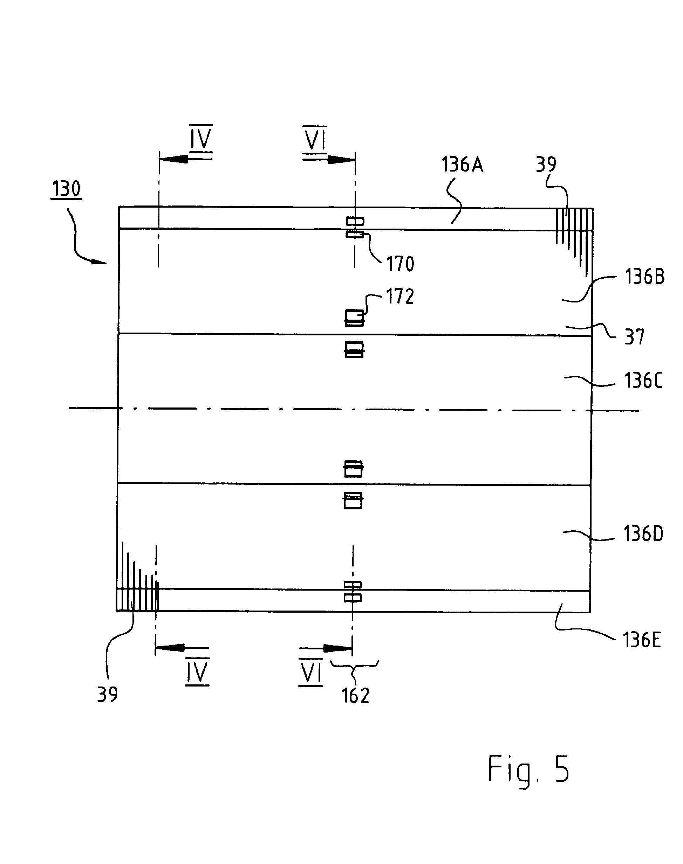

In dem zylindrischen Gehäuseteil 24 ist ein Blechpaket 27 (Fig. 2) eines Außenstators 28 angeordnet, dessen Wickelköpfe bei 30 und 32 angedeutet sind. Der Stator 28 hat eine Innenausnehmung 34, in der ein achtpoliger Innenrotor 36 mit einem Blechpaket 37 aus (in Fig. 5 schematisch angedeuteten) Elektroblechen 41 und mit insgesamt acht Permanentmagneten 38A bis 38H (vgl. Fig. 2) und auf einer Welle 40 angeordnet ist, deren Antriebsende mit 42 und deren inneres Wellenende mit 44 bezeichnet sind. Ein magnetisch wirksamer Luftspalt 39 trennt den Stator 28 vom Rotor 36. Ein solcher Motor 20 kann in verschiedener Weise bezeichnet werden, z. B. als permanent erregte Synchron-Innenläufermaschine, oder als elektronisch kommutierter Sinusmotor, oder als dreiphasiger Motor mit permanentmagnetischer Erregung.

Im A-Lagerschild 26 ist eine Dichtung 46 für die Welle 40 vorgesehen. Ferner befindet sich dort eine Ausnehmung 48, in der ein Führungsglied 50 für den Außenring 55 eines Wälzlagers 54 befestigt ist. Der Innenring 60 des Wälzlagers 54 ist auf die Welle 40 aufgepresst.

im offenen Ende des zylindrischen Gehäuseteils 24 ist ein B-Lagerschild 66 befestigt. Dieses hat eine mit einer Ringschulter 67 versehene Ausnehmung 68 für den Außenring 70 eines Wälzlagers 72, dessen Innenring 74 auf dem Wellenende 44 befestigt ist. Hierzu hat die Welle 40 einen Ringbund 78, mit dem sie gegen die linke Seite des Innenrings 74 anliegt. Gegen seine rechte Seite liegt ein Formstück 80 aus Messing an, das durch den Senkkopf 81 einer Senkkopfschraube 82 in Richtung zur Welle 40 gepresst wird und etwa ringförmig ausgebildet ist. Die Schraube 82 ist in ein Innengewinde 84 des Wellenendes 44 eingeschraubt und presst dadurch das Formstück 80 in Richtung zum Innenring 74.

Zum sicheren Einspannen des Außenrings 70 dient ein Teil 90, das durch drei gleichmäßig verteilte Schrauben 92 an seiner Peripherie am Lagerschild 66 befestigt ist und mit seinem radial inneren Teil gegen den Außenring 70 anliegt und diesen nach links gegen die Schulter 67 presst.

Nachdem das Formstück 80 mittels der Schraube 82 am Wellenende 44 befestigt worden ist, wird in einer Ausnehmung des Formstücks 80 ein Steuermagnet 110 befestigt. Letzterer ist auf seiner in Fig. 1 rechten Seite mit einem Magnetisierungsmuster versehen und dient zur Steuerung von magnetoresistiven Widerständen, die an einem Gehäusedeckel 112 auf der B-Seite des Motors 20 angeordnet sind und zur Erfassung der Drehstellung des Rotors 36 dienen, um Form und Kommutierung der Ströme im Stator 28 exakt zu steuern.

Fig. 2 zeigt in Vergrößerung einen Schnitt, gesehen längs der Linie II-II der Fig. 1. Die Magnete 38A bis 38H sind radial polarisiert. Der Magnet 38A hat außen einen Südpol S, innen einen Nordpol N. Der im Uhrzeigersinn nächste Magnet 38B hat außen einen Nordpol und innen einen Südpol S, und so weiter, wie aus der Zeichnung ersichtlich.

Das Statorblechpaket 27 hat außen einen magnetischen Rückschluss (yoke) 120, von dem zwölf Zähne 122A bis 122L radial nach innen ragen, die in der dargestellten Weise mit verbreiterten Zahnköpfen 124 versehen sind, zwischen denen sich Nuten 126 befinden. Die Größe der Nutteilung t_S zwischen 2 benachbarten Statornuten 126 beträgt bei diesem Beispiel τ_S = 360°/12 = 30° mech. (1)

Ebenso kann der Stator 28 z.B. mit neun Statorpolen und der Rotor 37 mit sechs Rotorpolen 144 ausgebildet sein (nicht dargestellt).

Die Zähne 122 sind mit konzentrierten Wicklungen bewickelt. Dargestellt ist das beispielhaft für die Phase U. Diese beginnt mit einer konzentrierten Wicklung 128G auf dem Zahn 122G, setzt sich fort in einer konzentrierten Wicklung 128D auf dem Zahn 122D, ferner in einer Wicklung 128A auf dem Zahn 122A, und einer Wicklung 128J auf dem Zahn 122J. Von dort geht der Strang U zurück zum Sternpunkt 0, falls eine Wicklung in Sternschaltung verwendet wird. Naturgemäß ist auch eine Dreieckschaltung möglich.

Die Teilwicklungen 128G, 128D, 128A und 128J können auch parallel geschaltet sein, z.B., falls der Motor 20 aus einer Gleichstromquelle mit niedriger Spannung betrieben wird, da man dann Wicklungsstränge mit niedriger Induktivität und niedrigem ohmschem Widerstand erhält. - Die Wicklungsstränge V und W sind in Fig. 2 nur angedeutet.

Der Rotor 36 ist auf einer Welle 40 (aus ferromagnetischem Werkstoff) angeordnet. Die Welle 40 ist in einem Rückschlussteil 130 befestigt. Sie ist Teil des magnetischen Kreises.

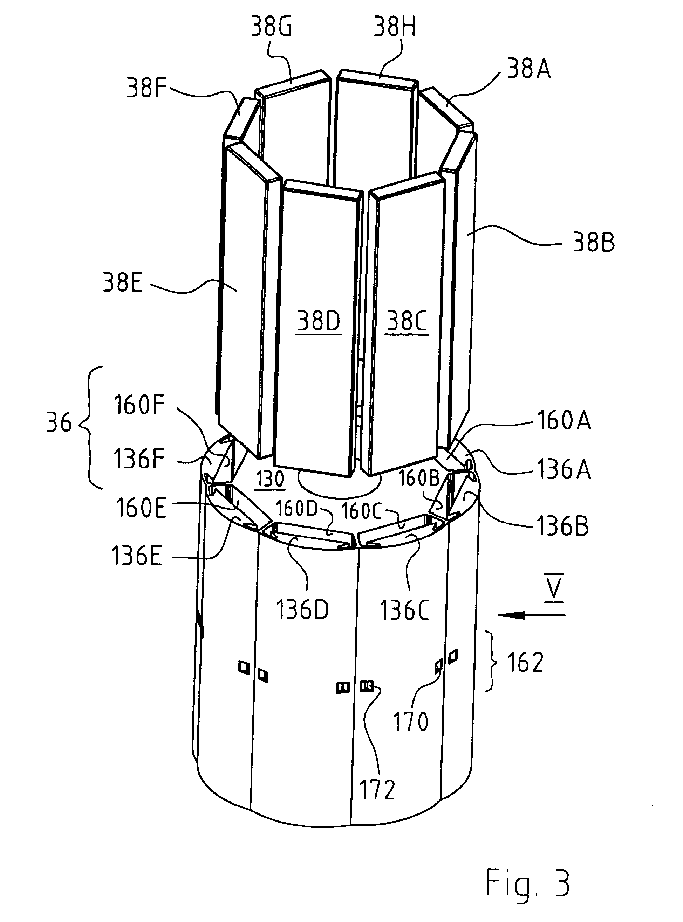

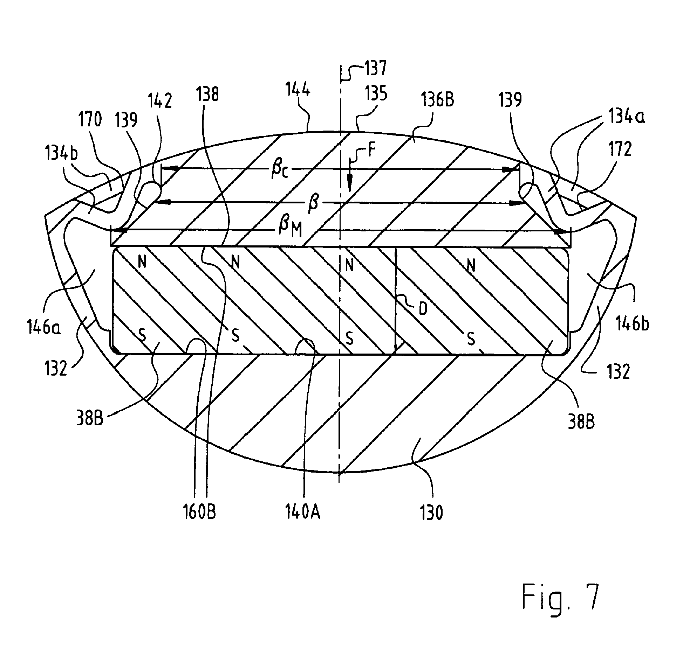

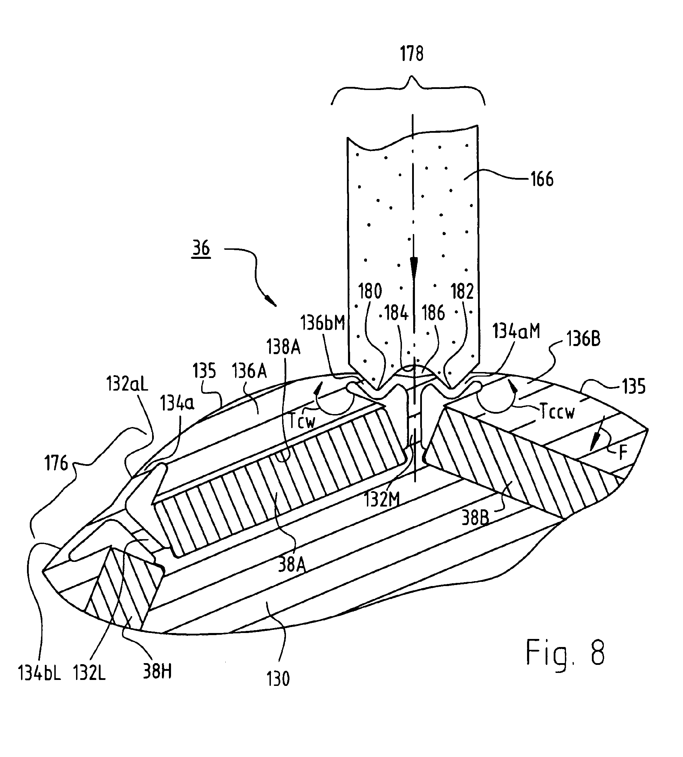

Fig. 3 zeigt in perspektivischer Darstellung Elemente eines neuartigen Rotors 36, nämlich unten ein Blechpaket 130 mit acht Rotor-Polschuhen 136A, 136B, 136C, 136D, 136E, 136F, 136G und 136H, von denen in Fig. 3 nur sechs Polschuhe sichtbar sind und welche acht Öffnungen 160A bis 160H (Fig. 3) definieren, die zur Aufnahme von acht Permanentmagneten 38A bis 38H dienen. Diese sind in Fig. 3 oben dargestellt und haben z.B. einen rechteckförmigen Querschnitt und sind radial magnetisiert, vgl. z.B. Fig. 7 oder Fig. 8.

Dargestellt sind einstückige Permanentmagnete 38, die gewöhnlich aus Magnetkeramik hergestellt und deshalb spröde sind. (Das können z.B. Neodymmagnete sein.) Möglich wäre es auch, die Magnete zu teilen. Z.B. könnte man sie aus zwei oder drei Stücken zusammensetzen, wobei dann aber die Befestigung im Rotor etwas komplizierter würde.

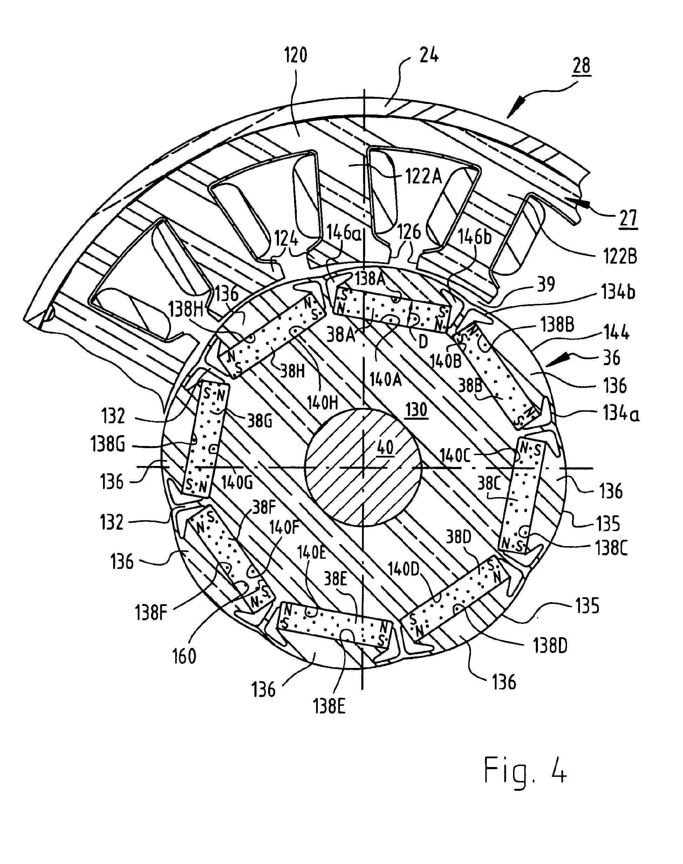

Die Polschuhe 136 haben jeweils auf ihrer dem Rückschluss 130 zugewandten Seite eine Grenzfläche 138A, 138B, 138C etc., die im Folgenden auch als Magnet-Polschuh-Grenze bezeichnet wird. Ihr liegt mit einem Abstand D (Fig. 4) eine Grenze 140A, 140B, 140C, ... gegenüber, die sich zwischen einem Magneten 38 und dem Rückschluss 130 erstrecken.

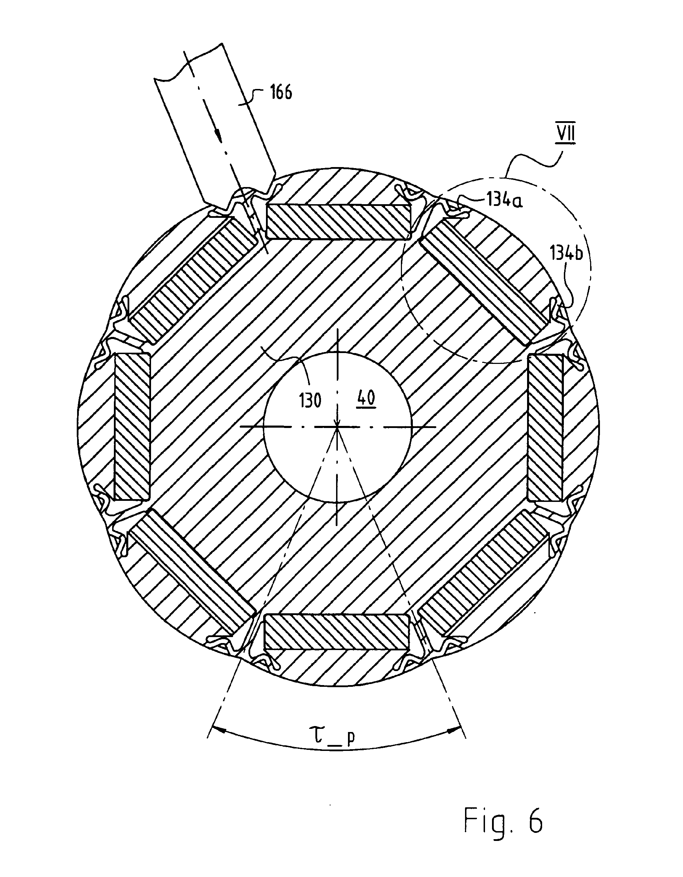

Zwischen diesen Grenzflächen 138, 140 sind die Permanentmagnete 38A, 38B etc. elastisch eingespannt, wie das nachfolgend anhand der Fig. 6 bis 8 beschrieben wird.

Wie Fig. 7 zeigt, hat ein Magnet 38 an seiner Magnet-Polschuh-Grenzfläche 138 eine Winkelerstreckung β_M, und sie entspricht in der Größe etwa derjenigen des an diese Grenzfläche anliegenden Polschuhs 136. Geht man von dieser Magnet-Polschuh-Grenzfläche 138 in radialer Richtung nach außen, so nimmt die Breite β des Polschuhs 136 beidseits längs einer Flanke 139 ab und erreicht an einer Stelle 142 ihre kleinste Breite β_C, die kleiner ist als β_M, vgl. Fig. 7.

Etwa radial außerhalb der Stelle 142 ist der Polschuh 136 seitlich über die peripher verlaufenden Halteteile 134a, 134b, die im Betrieb magnetisch gesättigt sind und deshalb hauptsächlich eine mechanisch tragende Funktion haben, mit Trägerteilen 132 verbunden, die radial verlaufen und die Halteteile 134a, 134b und über diese den Polschuh 136 mit dem magnetischen Rückschluss 130 verbinden.

Wie **Fig 4** zeigt, ist die radial äußere Seite 144 eines Polschuhs 136 jeweils so ausgebildet, dass im magnetisch wirksamen Luftspalt 39 eine etwa sinusförmige Flussverteilung entsteht, d.h. der Durchmesser nimmt, ausgehend von der Mitte 135 eines Rotorpols 136, in der dargestellten Weise nach beiden Seiten ab. Dieser Verlauf wird gewöhnlich empirisch ermittelt.

Auf beiden Seiten eines Dauermagneten 38, bezogen auf die Umfangsrichtung, befindet sich jeweils ein Hohlraum 146a, 146b, dessen Querschnittsform etwa einem rechtwinkligen Dreieck gleicht, bei dem eine Längsseite etwas eingedellt ist, weil dort ein radial äußeres Ende des Dauermagneten 38 etwas in diesen Hohlraum 146a hineinragt. Im Normalfall wäre eine solche Rotor-Topologie ungünstig und würde zu einer eher rechteckförmigen Flussverteilung im magnetisch wirksamen Luftspalt 39 und einem hohen Rastmoment führen. Durch die Einschnürung 142 (Fig. 7) der Polschuhe 136 mit dem Winkel β_C, der kleiner ist als β_M, erhält man jedoch eine Flussverteilung, die gut an die Sinusform angenähert ist.

Die Verengungen 142 bewirken einerseits eine Konzentration des magnetischen Flusses auf die Polmitte, und andererseits wirken sie als magnetische Widerstände, die auch im Bereich der Pollücken zwischen den Rotorpolen 136 einen kleinen magnetischen Fluss ermöglichen, wie er für eine sinusförmige Flussverteilung erwünscht ist. Durch entsprechende Dimensionierung der Hohlräume 146 kann man diesen seitlichen Fluss beeinflussen.

Die Fig. 3, **Fig. 6** und **Fig. 7** erläutern die neuartige Fixierung der Dauermagnete 38 in den Ausnehmungen 160 des Rotors 36.

Wie bereits erläutert, dürfen die Magnete 38 nicht klappern oder herausfallen, auch nicht bei höheren Drehzahlen, d.h. sie müssen in axialer und radialer Richtung sicher fixiert werden.

Zu diesem Zweck kann man die Magnete 38 in den Rotor 36 einkleben, oder zusätzlich an beiden Enden des Rotors 36 eine (nicht dargestellte) Scheibe auf die Welle 40 aufpressen. Auch kann man den Rotor 36 mit Kunstharz vergießen, doch erfordern alle diese Methoden zusätzlich Zeit und auch Hilfsmaterialien, Arbeitsplätze mit Absaugung, etc.

Beim vorliegenden Motor werden die Magnete 38 an Abschnitten 162 elastisch zwischen dem zugeordneten Polschuh, z.B. 136B in Fig. 7, und dem magnetischen Rückschluss 130 eingespannt. Dies geschieht dadurch, dass auf dem Längenabschnitt 162 (Fig. 3 und 5) des Rotors 36 mittels eines Werkzeugs 166, das in Fig. 6 und 8 schematisch dargestellt ist, bei einigen Rotorblechen 41 die Halteabschnitte 134a, 134b, deren ursprüngliche Form z.B. aus Fig. 4 hervorgeht, radial nach innen eingedrückt (eingekerbt, eingeprägt) werden, so dass man dort gebogene Abschnitte 170, 172 erhält, die diese Halteabschnitte 134a, 134b bis in die Nähe der dortigen Flanken 139 des Polschuhs 136 verformen.

Wenn man z.B. bei einem Rotor 36 Rotorbleche 41 mit einer Dicke von 0,35 mm verwendet, hat bei Versuchen eine Verformung der Halteabschnitte 134a, 134b von weniger als zehn Blechen 41 genügt, um die Magnete 38 sicher festzuhalten, d.h. die Abschnitte 162 waren in diesem Fall z.B. etwa zwei bis vier Millimeter lang. Ihre Länge hängt naturgemäß von Größe und Leistung des Motors 20 ab. Auch können ggf. mehrere solche Abschnitte 162 verwendet werden, z.B. am Anfang, in der Mitte und am Ende eines Rotors. Naturgemäß kann man auch dickere Rotorbleche 41 verwenden, z.B. mit einer Dicke von 0,5 mm oder mehr.

Durch die Eindrückungen (Einkerbungen, Einprägungen) 170, 172 entsteht eine radial nach innen wirkende Kraft F (Fig. 7, Fig. 8) auf den betreffenden Polschuh 136, und diese Kraft F hält den Dauermagneten 38 in seiner Ausnehmung 160 sicher fest, so dass er weder klappern noch herausfallen kann.

Außerdem ergibt sich eine erhebliche Reduzierung der Montagezeit, und die Gefahr einer Beschädigung der Magnete 38 entfällt, da die Eindrückung 170, 172 nicht direkt auf die Magnete 38 wirkt, sondern auf deren Halteabschnitte 134a, 134b, die zusätzlich zu ihrer tragenden Funktion jetzt auch noch die Funktion einer Feder erhalten, welche die Kraft F erzeugt.

Die Magnete 38 werden bevorzugt vor der Verformung der Halteabschnitte 134a, 134b in die Ausnehmungen 160 eingesetzt.

**Fig. 8** dient zum besseren Verständnis.

Auf der linken Seite ist bei 176 die Rotorform gemäß Fig. 1 und 2 dargestellt. Hierbei ist der Polschuh 136A, unterhalb dessen sich der Rotormagnet 38A befindet, auf seiner linken Seite starr durch ein im Wesentlichen gerades Halteteil 134aL mit dem radial verlaufenden Trägerteil 132L und über dieses mit dem Rückschluss 130 verbunden.

Diese Teile bilden also in ihrer Gesamtheit ein Teil, das man als starre Schale (shell) bezeichnen kann, welche eine äußere Wand 138A des Hohlraums für den Magneten 38A bildet.

Fig. 8 zeigt als Kontrast hierzu bei 178 die Verformung der in Fig. 8 mittleren Halteteile 134aM und 134bM durch das Werkzeug 166.

Hierzu hat das Werkzeug 166 an seiner Arbeitsseite, also in Fig. 8 unten, zwei Vorsprünge 180, 182, zwischen denen sich eine Vertiefung 184 befindet, so dass das Werkzeug 166 an seiner Arbeitsseite etwa die Form eines "W" hat.

Die Vertiefung 184 bildet einen Hohlraum 186, der eine Trennung zwischen dem radial äußeren Ende des Trägerteils 132M und dem Werkzeug 166 bildet, so dass dieses das Trägerteil 132M nicht (oder nur wenig) stauchen kann.

Dagegen bewirkt der Vorsprung 180 eine Eindrückung des Halteteils 134bM, und der Vorsprung 182 bewirkt eine Eindrückung des Halteteils 134aM, wie das in Fig. 8 stark vergrößert dargestellt ist.

Hierdurch entsteht am linken Ende des Halteteils 134bM ein Drehmoment Tcw auf das rechte Ende des Polschuhs 136A, welches diesen elastisch auf den Dauermagneten 38A presst.

Ebenso entsteht am rechten Ende des Halteteils 134aM ein Drehmoment auf das linke Ende des Polschuhs 36B, welches diesen elastisch auf den Dauermagneten 36B presst.

Auf diese Weise werden durch die W-förmige Verformung der Halteteile 134a, 134b diese zusätzlich als Federn wirksam, welche die Magnete 38 in ihren Ausnehmungen elastisch festhalten.

Da diese beschriebenen Drehmomente auf die beiden Enden eines Dauermagneten jeweils in umgekehrter Richtung wirken, wird der Dauermagnet im Rotor sicher festgehalten.

Zweckmäßig geht man so vor, dass bei der Herstellung des Rotors jeweils die erforderliche Zahl von Werkzeugen 166 verwendet wird.

Beim Ausführungsbeispiel hat der Rotor 36 acht Dauermagnete 38, und der Rotor wird deshalb in eine Vorrichtung mit acht Werkzeugen 166 gebracht, die gleichzeitig betätigt werden und dabei alle Halteteile 134a, 134b gleichzeitig verformen, so dass in einem einzigen Arbeitsgang im Rotorbereich 162 (Fig. 5) alle acht Dauermagnete 38 gleichzeitig elastisch befestigt werden.

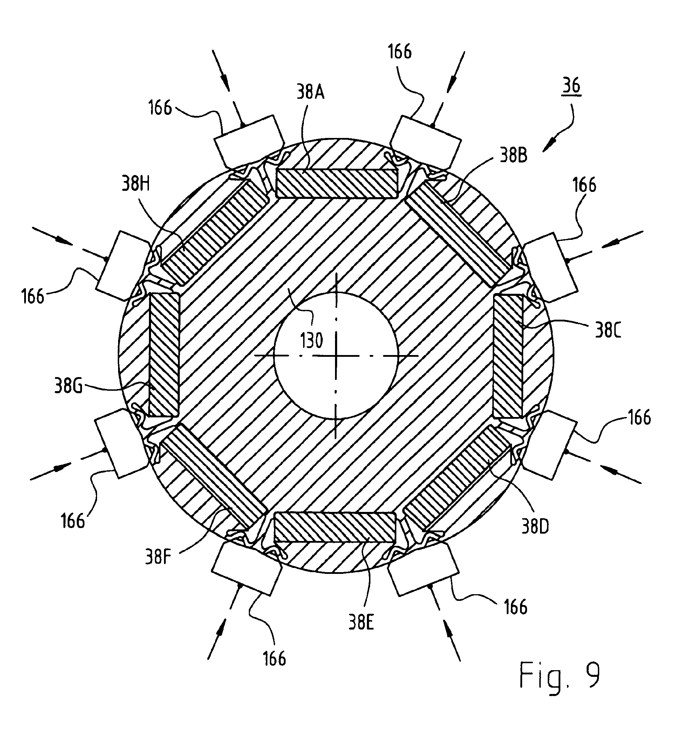

**Fig. 9** zeigt schematisch diese bevorzugte Art der Befestigung der Magnete 38A bis 38H im Blechpaket des Rotors 36.

Hierzu verwendet man acht Werkzeuge 166, die um den Rotor 36 herum angeordnet sind und gleichzeitig mittels eines geeigneten, nicht dargestellten Antriebs in Richtung zum Rotor 36 bewegt werden, um identische Verformungen der Halteglieder 134a, 134b zu bewirken, wie das in Fig. 8 an einem Beispiel dargestellt ist.

Bei der Verformung werden die Halteglieder dort abgebogen, wo sie mit dem zugeordneten Polschuh (in Fig. 8: Polschuhe 136A und 136B) verbunden sind. Nach diesem Biegevorgang federn die Halteglieder 134aM, 134bM wieder etwas zurück, und dieses Zurückfedern bewirkt die in Fig. 8 angedeuteten Drehmomente Tcw (Drehmoment im Uhrzeigersinn) und Tccw (Drehmoment entgegen dem Uhrzeigersinn), welche die Kräfte F erzeugen, die die Magnete 38 festklemmen.

Naturgemäß sind im Rahmen der vorliegenden Erfindung vielfache Abwandlungen und Modifikationen möglich.

## Patentansprüche

1. Elektromotor, welcher aufweist:
Einen Stator (28) mit einem mit Nuten (126) versehenen Statorblechpaket (27);
eine in diesen Nuten (126) angeordnete Statorwicklung (U, V, W);
einen vom Stator (28) durch einen magnetisch wirksamen Luftspalt (39) getrennten Rotor (36), welcher auf seiner diesem Luftspalt (39) zugewandten Seite eine Mehrzahl von ausgeprägten Polen (135) mit diesem Luftspalt (39) zugewandten Polschuhen (136) und auf seiner vom Luftspalt (39) abgewandten Seite einen magnetischen Rückschluss (130) aufweist, welcher durch Halteabschnitte (132, 134a, 134b) mechanisch mit den Polschuhen (136) verbunden ist;
eine zwischen dem magnetischen Rückschluss (130) und einem Polschuh (136) vorgesehene Ausnehmung (160), in welcher zur Erzeugung eines magnetischen Flusses in diesem Polschuh (136) mindestens ein Permanentmagnet (38) angeordnet ist, so dass am Übergang von diesem Permanentmagneten zum zugeordneten Polschuh eine Magnet-Polschuh-Grenze (138) definiert wird, und an welche Ausnehmung (160) sich auf jeder Seite des mindestens einen Permanentmagneten (38) etwa in Umfangsrichtung ein magnetisch schlecht leitender Bereich (146a, 146b) anschließt, der auf seiner dem Luftspalt (39) zugewandten Seite an einen der Halteabschnitte (134a, 134b) angrenzt;
wobei
- die in Umfangsrichtung gemessene Breite (β) eines Polschuhs (136) mindestens bereichsweise in Richtung weg von der Magnet-Polschuh-Grenze (138) zum Luftspalt (39) hin in einer Übergangszone bis zu einer Stelle (142) geringster Breite abnimmt,
- ein Polschuh (136) in dieser Übergangszone jeweils auf seiner dem benachbarten Polschuh (136) zugewandten Seite eine Flanke (139) aufweist, und
- die Halteabschnitte (134a, 134b) als Federelemente ausgebildet sind, welche die Polschuhe (136) in Richtung zu den zugeordneten Permanentmagneten (38) beaufschlagen, um letztere in den für sie vorgesehenen Ausnehmungen (160) festzuhalten.

2. Motor nach Anspruch 1, bei welchem zumindest die Mehrzahl der als Federelemente ausgebildeten Halteabschnitte (134a, 134b) die ihnen jeweils gegenüberliegende Flanke (139) eines Polschuhs (136) nicht berühren.

3. Elektromotor nach Anspruch 1 oder 2, bei welchem die in Umfangsrichtung gemessene Breite (β_M) eines Polschuhs (136) an der Magnet-Polschuh-Grenze (138) größer ist als seine Breite (β_C) an einer Stelle (142), an welcher diese Breite am kleinsten ist.

4. Elektromotor nach einem der vorhergehenden Ansprüche, bei welchem der mindestens eine Rotormagnet (38), welcher in der zwischen dem magnetischen Rückschluss (130) und dem Polschuh (136) vorgesehenen Ausnehmung (160) angeordnet ist, auf seiner dem Rückschluss (130) zugewandten Seite eine Winkelerstreckung aufweist, welche etwa 85 % oder mehr einer Polteilung (τ_P) des Rotors (36) beträgt.

5. Elektromotor nach Anspruch 4, bei welchem die Winkelerstreckung etwa 95 % einer Polteilung (-r_P) des Rotors (36) beträgt.

6. Elektromotor nach einem der vorhergehenden Ansprüche, bei welchem die Statorwicklung (U, V, W) konzentrierte Wicklungen (128G) aufweist.

7. Elektromotor nach einem der vorhergehenden Ansprüche, welcher als Innenläufermotor ausgebildet ist.

8. Elektromotor nach einem der vorhergehenden Ansprüche, bei welchem der mindestens eine Permanentmagnet als Keramikmagnet (38) ausgebildet ist.

9. Elektromotor nach einem der vorhergehenden Ansprüche, bei welchem zwischen zwei benachbarten Rotorpolen (135) ein Trägerteil (132) angeordnet ist, das sich in Richtung zum Luftspalt (39) erstreckt und von dessen radial äußerem Bereich sich mindestens ein Halteabschnitt (134a, 134b) zum Polschuh (136) eines benachbarten Rotorpols (135) erstreckt, welcher Halteabschnitt (134a, 134b) durch eine Einkerbung (170, 172) zu einem Federglied verformt ist, das diesen Polschuh (136) in Richtung weg vom magnetisch wirksamen Luftspalt (39) beaufschlagt.

10. Elektromotor nach Anspruch 9, bei welchem sich vom radial äußeren Bereich des Trägerteils (132) zu jedem der beiden benachbarten Polschuhe (136) ein Halteabschnitt (134a, 134b) erstreckt, welche Halteabschnitte (134a, 134b) jeweils durch eine Eindrückung (170, 172) zu einem Federglied verformt sind, das den zugeordneten Polschuh (136) in Richtung weg vom magnetisch wirksamen Luftspalt (39) beaufschlagt.
